# EUROPEAN PATENT SPECIFICATION

(11) **EP 1 064 170 B1**
(45) Date of publication and mention of the grant of the patent: **27.02.2002**
(21) Application number: 99942582.0
(22) Date of filing: 19.03.1999
(51) Int. Cl.: B60R 9/058

(54) **LOAD-CARRIER DEVICE FOR MOTOR VEHICLE ROOFS**
LASTENTRÄGER FÜR KRAFTFAHRZEUGDÄCHER
DISPOSITIF PORTE-CHARGE POUR TOITS DE VEHICULES AUTOMOBILES

(30) Priority: 23.03.1998 IT TO980250; 06.04.1998 IT TO980066 U
(43) Date of publication of application: 03.01.2001
(73) Proprietor: FAPA S.p.A., 10092 Beinasco (Torino) (IT)
(72) Inventor: GEMESIO, Diego, I-12045 Fossano (IT)
(74) Representative: Saconney, Piero
(86) International application number: IB9900464
(87) International publication number: WO9948723

(56) References cited:
- EP-A- 0 151 907
- EP-A- 0 176 404
- EP-A- 0 265 752
- EP-A- 0 354 104
- EP-A- 0 792 771
- FR-A- 2 583 357
- GB-A- 827 055
- US-A- 2 888 178
- US-A- 4 757 929
- US-A- 4 995 538
- US-A- 5 137 195

## Description

The present invention relates to a load-carrier device for motor vehicle roofs according to the preamble of claim 1.

In the following description and in the claims, the expression "load-carrier device" is intended to mean simple carry-all bars, ski racks, bicycle racks, devices for transporting boats, sail boards or snowboards and the like.

Various types of load-carrier devices for the roofs of motor vehicles are known which comprise a pair of bars to be secured transversely to the vehicle roof by means of suitable supports.

It is known that, in order to obtain optimum fastening of the load-carrier device to the roof of a motor vehicle, it is often necessary to provide complete interchangeable supports or interchangeable parts of those supports having structures such as to enable them to fit the various roof shapes.

A device of that type, according to the preamble of claim 1, is described and illustrated, for example, in document IT-U-208 253.

In that document the tensioning strip, which is rigid, is in a single piece with the coupling member engageable with the edge of the roof.

The device is not versatile in the sense that it is provided for only one type of motor vehicle roof and, if fitted to roofs of other types, the tensioning strip has to be replaced in accordance with the shape of the roof.

In order to solve the problem of how to adapt a single load-carrier device to different shapes, load-carrier devices have been proposed in the past which comprise flexible elements such as straps, or metal tensioning strips.

An example of that type of solution is described and illustrated in document EP-A-0 792 771. That document relates to a load-carrier device comprising a bar of predetermined length towards the ends of which are provided supports equipped with a flexible metal strip which is provided with an interchangeable coupling member suitable for engaging with an edge of the vehicle roof.

The strip is provided with notches that can be engaged by toothed arms which can be caused to move to and fro by means of a manual lever integrated in each support.

By means of the lever, it is possible to control the toothed arms in such a manner as to place the metal strip under tension on the roof of the vehicle.

A disadvantage of the device illustrated in document EP-A-0 792 771 results from the fact that it is impossible to adjust the length of the bar as a function of the width of the roof owing to the presence of the mechanism for pulling the metal strip and the control lever integrated in the support.

Owing to that disadvantage, it is necessary to produce a range of models of load-carrier devices having bars of different lengths for fitting onto the various motor vehicle models.

However, because it is not possible to produce one model of load-carrier device for each model of motor vehicle, the fastening of the device may in many cases be unsatisfactory.

An object of the present invention is therefore to solve the problem of how to obtain a load-carrier device according to the preamble of claim 1 which is adaptable to a vast range of motor vehicle models and which comprises a tensioning strip which does not come into contact with the edge region of the roof, irrespective of the shape of the edge region of the roof, and for a whole range of distances between the support and the edge of the roof.

A further disadvantage associated with the system of securing the load-carrier device to the motor vehicle roof according to the teachings of document EP-A-0 792 771 relates to the angle of entry of the metal strip into the support of the load-carrier device. In that document, the angulation is variable between 30° and 40° relative to the horizontal. This restriction involves the disadvantage of not permitting efficient securing in cases where the motor vehicle roof is not very strong and is readily deformable and it is therefore advisable to secure the supports in a position very close to the edge of the roof, forcing the strip to assume a substantially upright position.

A further object of the present invention is therefore to provide a load-carrier device for motor vehicles which can be readily secured to various vehicles without the risk of excessive stresses on the roof.

According to the invention, those objects are achieved by means of a load-carrier device as claimed.

Also known from document GB-A-2 221 664 is a load-carrier device in which a bearing surface of fixed inclination is provided for a flexible tensioning strip.

That known device does not enable the inclination of the tensioning strip to be adjusted in such a manner that it follows, between the support and the coupling member, a path in which the strip is adjacent to the edge region of the roof but does not come into contact therewith.

In the whole of the present description and in the claims, terms such as outer, inner, upper, lower, lateral, transverse and the like are to be understood as referring to the installed state of the load-carrier device on the roof of a motor vehicle, to the positions of its various elements relative to the roof and to the direction of travel of the motor vehicle.

Further characteristics and advantages of the present invention will become clear from the reading the following detailed description which is given with reference to the appended drawings which are provided by way of non-limiting example and in which:
Figure 1 is an exploded perspective view showing one end of a bar and a support of a load-carrier device for motor vehicle roofs according to a first embodiment of the invention,
Figure 2 is a sectional elevation, corresponding to Figure 1, in which a closing cover is also shown,
Figure 3 is a partly sectional exploded view of a detail of the closing system of the cover of Figure 2,
Figure 4 is a front view of the system of Figure 3 having an open anti-theft lock,
Figure 5 is a front view analogous to that of Figure 3 with the anti-theft lock closed,
Figure 6 is a diagrammatic elevation of the support of Figure 1 in which the end of the bar is again represented,
Figures 7a, 7b and 7c are perspective views of a variant of the bearing foot of the support of Figures 1 to 6,
Figure 8 is an elevation similar to Figure 6 showing a second embodiment of the invention,
Figure 9 is an exploded perspective view of a guide forming part of the support of Figure 8,
Figure 10 is a perspective view of the guide of Figure 9 in the assembled state,
Figure 11 is a perspective view of the guide of Figure 9 shown upside down,
Figure 12 is an elevation of the support of Figures 8 to 11 mounted on the roof of a vehicle, the edge of which is provided with a gutter, and also of one end of the associated bar,
Figure 13 is a perspective view corresponding to Figure 12,
Figure 14 is a partly exploded perspective view of a support according to a third embodiment of the invention in which the corresponding end of the associated bar is again represented,
Figure 15 is a perspective view similar to that of Figure 14 which illustrates the device in a position in which the support is folded relative to the bar,
Figure 16 is a further exploded perspective view of the parts illustrated in Figure 14, in a stage of assembly of the device, and
Figures 17 and 18 are partially cut-away elevations showing the support of Figure 14 and the end of the associated bar in two different positions.

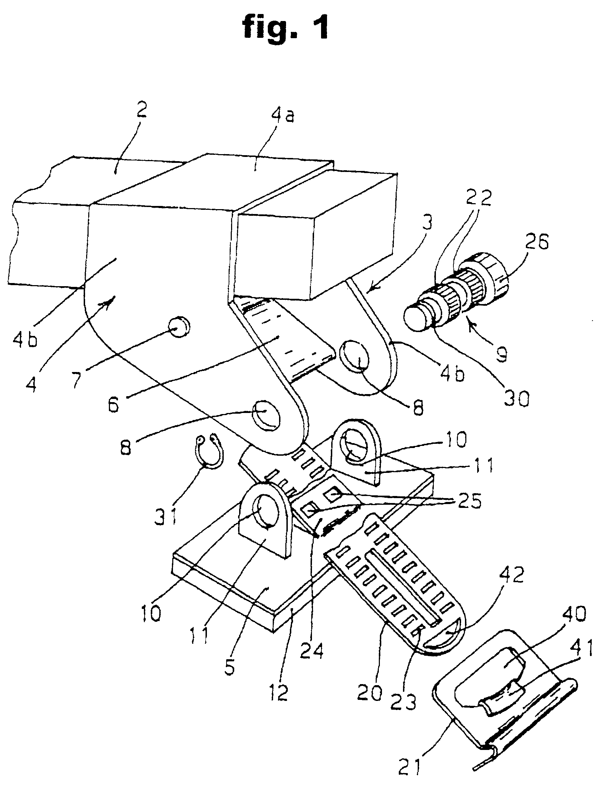

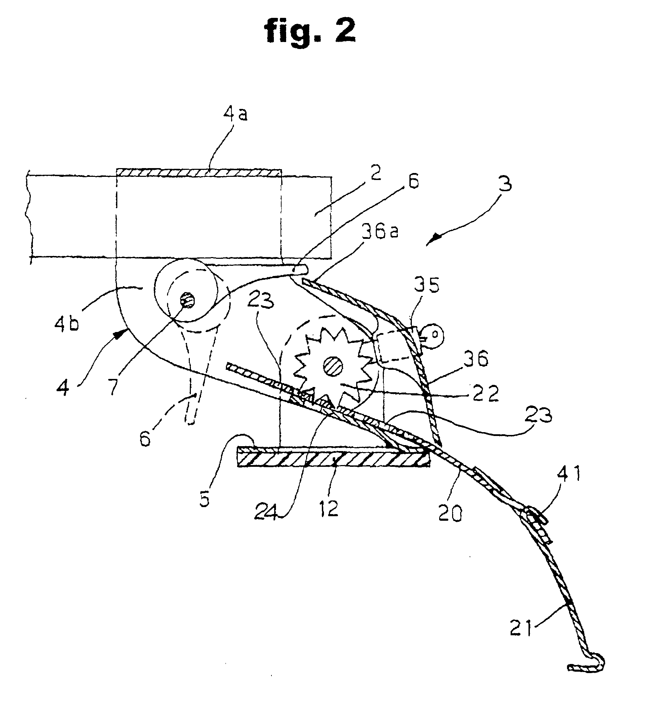

With reference to Figures 1 and 2, a load-carrier device for motor vehicles according to a first embodiment of the invention comprises a transverse bar 2, each end of which is secured to the inside of a support 3.

The support 3 comprises a U-shaped sheet-metal bracket 4 and an orientable bearing foot 5 constituted by a sheet-metal plate which is to bear the support 3 at an edge region of the vehicle roof.

The bracket 4 comprises a horizontal upper wall 4a beneath which the transverse bar 2 is slidably engaged, and two upright sidewalls 4b for securing, by means of a pin 7, a cam lever 6 which is used to lock the bar 2 against the upper wall 4a of the bracket 4.

The sidewalls 4b of the bracket 4 have, at their ends, holes 8 for the hinging of the orientable bearing foot 5.

The hinging is produced by means of a pin 9 which extends through the holes 8 and through holes 10 formed in lugs 11 of the orientable foot 5.

Formed in the pin 9 is a circumferential groove 30 for accommodating a snap ring 31 which prevents the pin from coming out of the holes 8 and 10.

The foot 5 is provided with a base 12 of plastics material in order to prevent damage to the surface of the vehicle roof when the load-carrier device is in the installed position.

On the orientable foot 5, in the region of a central portion between the lugs 11, is an inclined bearing and sliding surface which slopes outwards and is formed by a wing 24 obtained by semi-cutting into the plate forming the orientable foot 5.

Advantageously, the wing 24 can be caused to assume an inclination descending towards the edge of the roof of from 0° to 90°, depending on the vehicle model on which the device is to be installed.

The inclination of the wing 24 can be varied by modifying the bending thereof about its linear bending or root region which, in the installed state, is substantially parallel to the edge of the roof.

The wing 24 has a pair of rectangular openings 25 permitting the partial penetration of the teeth of two sprocket wheels 22 which are fast with the pin 9.

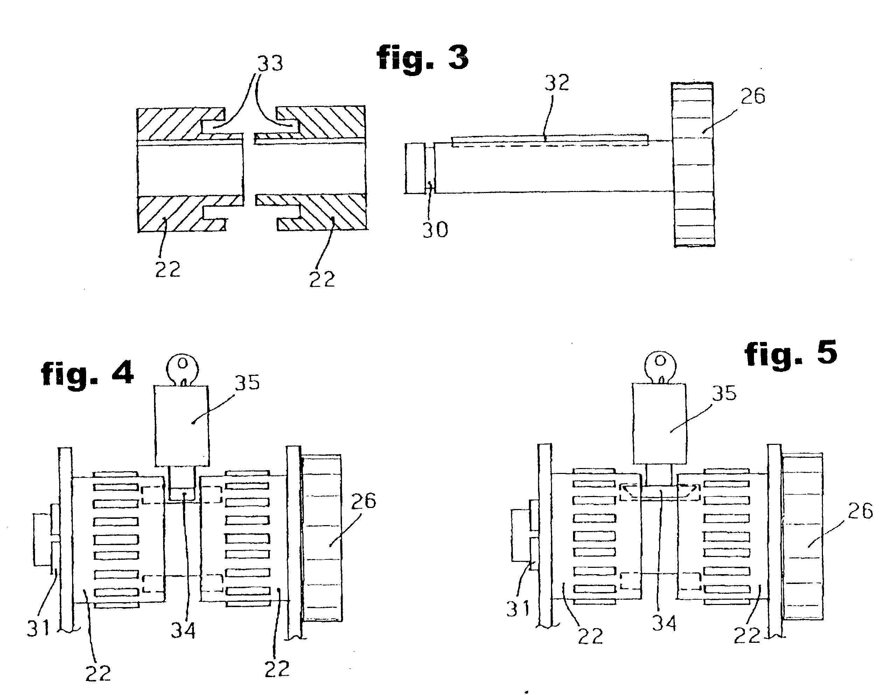

As illustrated in Figure 3, the sprocket wheels 22 are keyed onto the pin 9 by means of a key 32.

The pin 9 can be caused to rotate by means of a key (not illustrated) inserted into a hole in the head 26 of the pin 9.

Between the bearing and sliding surface, constituted by the wing 24, and the sprocket wheels 22 is an inextensible metal tensioning strip 20 which has two longitudinal parallel rows of slots 23 in which the teeth of the sprocket wheels 22 engage.

The strip 20 is preferably flexible.

The sliding of the metal strip 20 on the surface 24 is brought about by the rotation of the pin 9 owing to the mutual engagement of the teeth of the sprocket member, constituted by the two sprocket wheels 22, and the slots 23 in the strip 20.

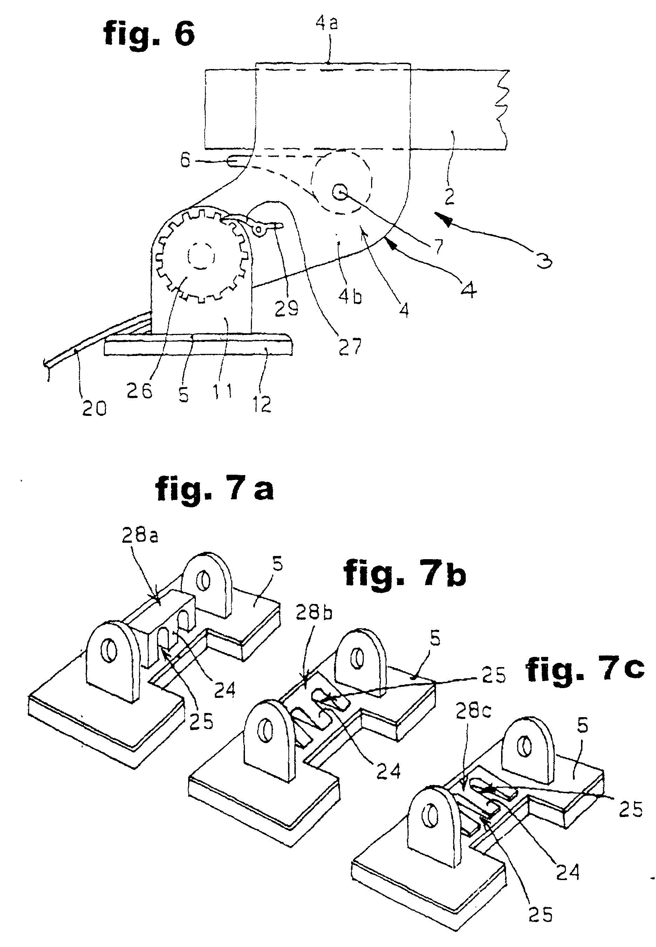

With reference to Figure 6, a pawl 27 pivoted externally on one of the upright sides 4b and engaging in teeth formed on a head 26 of the pin 9 permits rotation of the pin 9 only in the sense in which the tensioning strip 20 is pulled towards the inside of the support 3, while rotation in the opposite sense is permitted only when the pawl 27 is disengaged manually from the head 26 of the pin 9 by means of an unlocking lever 29 formed by an arm of the pawl 27.

Referring again to Figure 1, one end of the strip 20 has a crescent-shaped slot 42 for the attachment of a coupler 21 selected from a plurality of couplers shaped in such a manner as to fit the various types of motor vehicle.

Advantageously, the strip 20 is connected to the coupler 21 by inserting the strip 20 in an opening 40 in the coupler 21 and by inserting a curved hooking wing 41 into the crescent-shaped slot 42.

The device according to the invention is locked in position by securing the coupler 21, of the type adapted to the shape of the motor vehicle roof, to the means provided on the edge of the motor vehicle roof for securing the load-carrier devices and by placing the metal strip 20 under tension by means of the sprocket wheel mechanism 22.

That arrangement eliminates one disadvantage of the devices according to document EP-A-0 792 771.

The disadvantage was due to the fact that the system for securing the coupler to the metal strip according to that prior art did not permit lateral pivoting of the interchangeable coupler relative to the strip, therefore restricting the angulation of coupling to the edge of the motor vehicle roof and consequently the securing point of the load-carrier device.

With the arrangement illustrated in Figure 1, because the coupler 21 is connected to the strip 20 by means of a curved hooking wing 41 inserted in the crescent-shaped slot 42, the coupler 21 can pivot freely to either side of the strip 20, adapting itself to the shape of the edge of the motor vehicle roof irrespective of the region of the roof where it is desired to secure the support.

Thus, the securing means of the load-carrier device according to the invention can be adapted perfectly to the vehicle roof, conforming to the inclination, if any, of the coupling surface on the edge of the roof with which the coupler 21 engages, relative to the edge region of the vehicle roof on which the orientable foot 5 rests by way of its base 12 of plastics material.

The bending angle of the wing 24 will be selected by the manufacturer or the final installer in such a manner that the tensioning strip 20 follows, between the support 3 and the coupler 21, a path in which the strip 20 is adjacent to the edge region of the roof, but does not come into contact therewith.

Figures 3 to 5 show the details of an anti-theft mechanism of the load-carrier device of Figures 1 and 2.

The adjacent faces of the sprocket wheels 22 each have an annular groove 33 in order to define, when the sprockets 22 are mounted on the pin 9, a circumferential seat suitable for accommodating a rotatable anchor 34 provided at the end of a lock barrel 35.

The lock barrel 35 is unitary with a cover 36 which is illustrated in Figure 2 and which is produced, for example, from a plastics material. The cover 36, once locked, prevents access to the mechanism for pulling the strip 20 and, consequently, to the lever 29 for unlocking the pawl 27.

As shown in Figure 2, the upper end 36a of the cover 36 also locks the cam lever 6 in the closing position, preventing the bar 2 from coming out of the support 3.

Figures 7a, 7b and 7c illustrate a variant of the orientable bearing foot 5 in which the bearing and sliding surface 24 is defined by interchangeable prismatic blocks 28a, 28b, 28c which are provided with openings 25 and are secured to the orientable foot 5 by known means, for example screws, in such a manner that they can be rapidly replaced.

The openings 25 are used for the passage of the sprocket wheels 22 in order to enable them to engage the above-mentioned metal strip.

Owing to the various inclinations of the upper faces of the blocks 28, the sliding surface 24 can assume, for example, relative to the foot 5, an inclination of 90° (Figure 7a), 45° (Figure 7b) or 20° (Figure 7c).

Thus, by simply replacing the prismatic blocks 28a, 28b, 28c, it is possible to adapt the load-carrier device to various motor vehicle models, always in such a manner that the tensioning strip 20 follows a path in which it is adjacent to the edge region of the roof, but does not come into contact therewith.

The orientable foot 5 of Figures 7a, 7b, 7c has a recess in its edge facing outwardly relative to the load-carrier device in order to prevent contact between the edge of the foot 5 and the strip 20.

The presence of the recess is especially advantageous when the inclination of the strip 20 is close to 90° relative to the foot 5, as in the case of the block 28a of Figure 7a.

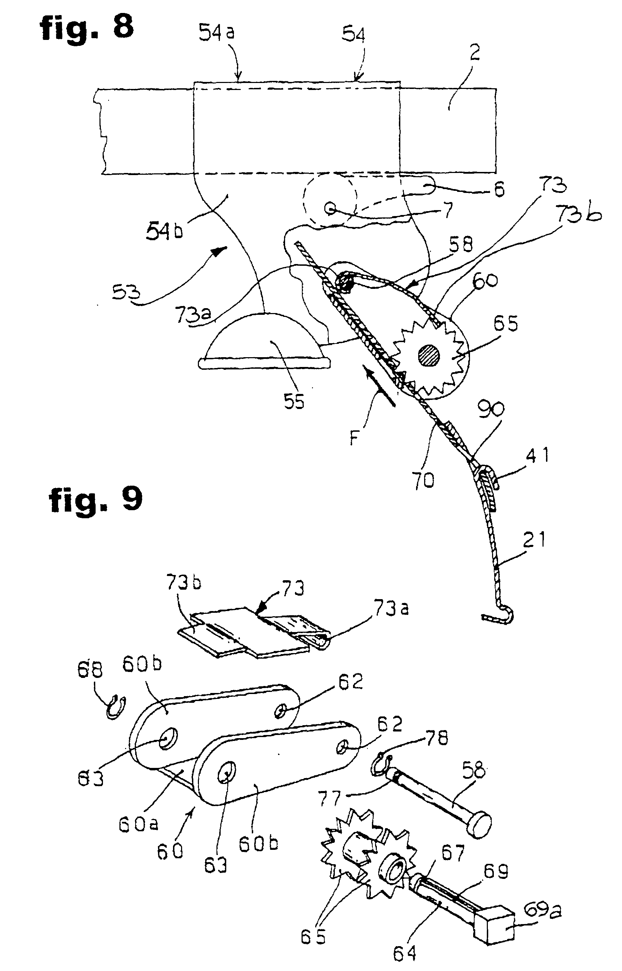

Figure 8 shows a second embodiment in which a support 53 comprises a bracket 54 in the form of an inverted U, the upright sides 54b of which have a pair of holes for the hinging, by means of a pin 58, of a U-shaped sheet-metal element 60 which comprises a base wall 60a and two lateral cheeks 60b.

The upper wall of the bracket 54 is indicated 54a.

The device of Figure 8 also comprises a cam lever 6 having a pin 7 for locking the bar 2 against the upper wall 54a of the bracket 54.

The element 60 constitutes a freely pivoting guide and its base wall 60a constitutes a bearing and sliding surface for a tensioning strip 70 like that of Figures 1 and 2.

As shown more clearly in Figures 9 to 11 the cheeks 60b have, at a lower end, holes 62 for mounting the pivoting guide 60 in the bracket 54 by means of the pin 58.

The pin 58 has a circumferential groove 77 for accommodating a snap ring 78 which prevents it from coming out of the holes 62.

The lateral cheeks 60b have holes 63 for the passage of a pin 64 carrying a sprocket member in the form of a pair of sprocket wheels 65 keyed on to the pin 64 by means of a key 69.

The sliding surface 60a has a pair of rectangular openings 66 permitting the partial penetration of the teeth of the sprocket wheels 65 which are fast with the pin 64.

The pin 64 also has a circumferential groove 67 for accommodating a snap ring 68 which prevents it from coming out of the holes 63.

The pin 64 can be made to rotate by means of a spanner (not shown) applied to its square head 69a.

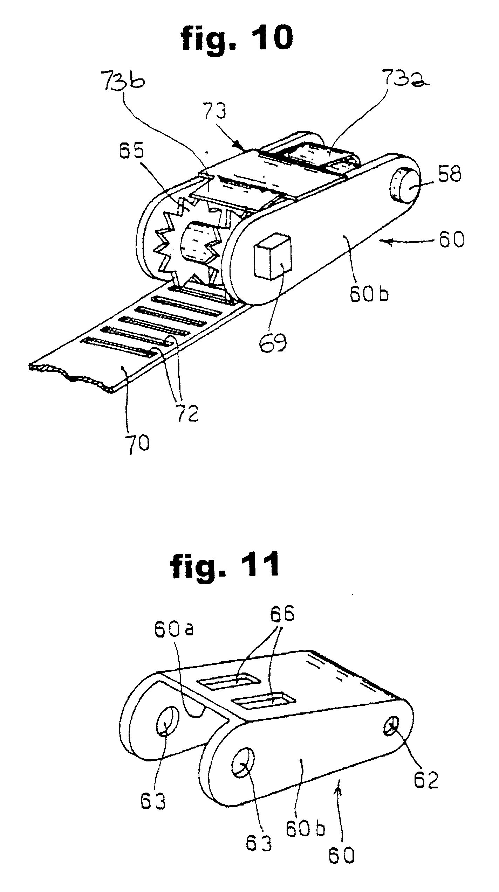

With reference to Figures 9 and 10, an inextensible metal strip 70 which has a series of parallel transverse slots 72 in which the teeth of the sprocket wheels 65 engage is arranged between the sliding surface 60a and the sprocket wheels 65.

The strip 70 is preferably flexible.

The sliding of the metal strip 70 on the surface 60a is brought about by the rotation of the pin 64 and, consequently, by the mutual engagement of the teeth of the sprocket wheels 65 and the slots 62 of the strip 70.

A pawl 73 is provided in order to permit the rotation of the pin 64 only in the sense indicated by the arrow F in Figure 8, corresponding to the direction of pulling the strip 70 towards the inside of the pivoting guide 60.

The pawl 73 is in the form of a sheet-metal plate which is fashioned in such a manner that it has an end 73a bent to envelop the pin 58.

At the opposite end, the pawl 73 has a tongue 73b which engages in the notches of the sprocket wheels 65.

The rotation of the pin 64 in the sense opposite to that indicated by the arrow F and the consequent sliding of the strip 70 towards the outside relative to the pivoting guide 60 are permitted only when the pawl 73 has been disengaged manually from the sprocket wheels 65.

Analogously to the description given with reference to Figures 1 to 6, the strip 70 comprises a crescent-shaped slot 90 for securing the coupling wing 41 of a coupler 21 like that shown in Figures 1 and 2.

The device of Figures 8 to 11 is locked in position by securing the coupler 21, of a type adapted to the shape of the edge of the motor vehicle roof, to the means provided on that edge for securing the load-carrier devices and by placing the metal strip 70 under tension by means of the sprocket wheels 65.

The guide 60, because it is freely pivoting, enables the sliding surface 60a to be oriented in such a manner that it conforms to the inclination assumed by the metal strip 70 when the strip is placed under tension, all in such a manner that the strip 70 follows a path close to the roof edge but does not come into contact therewith.

Advantageously, according to this embodiment, the means for securing the load-carrier device can be adapted perfectly to the vehicle roof regardless of the inclination of the foot.

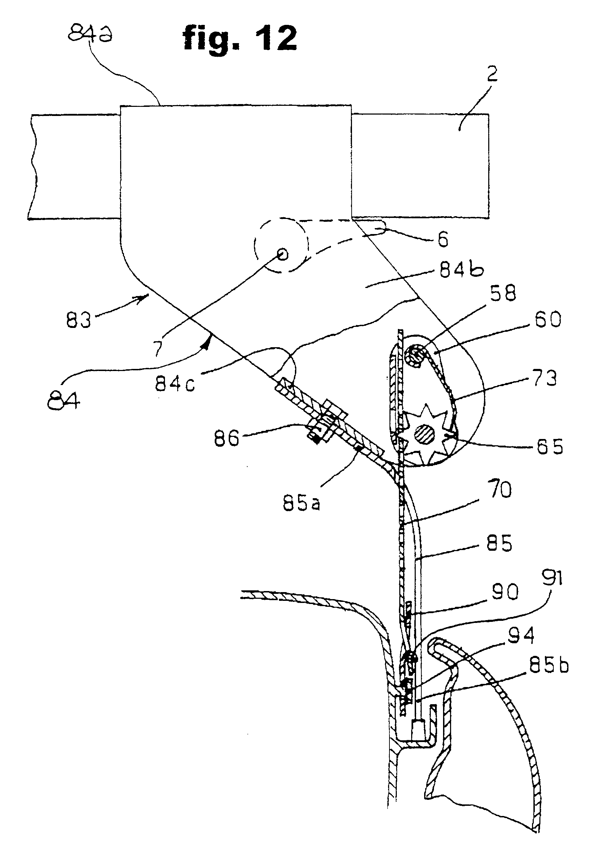

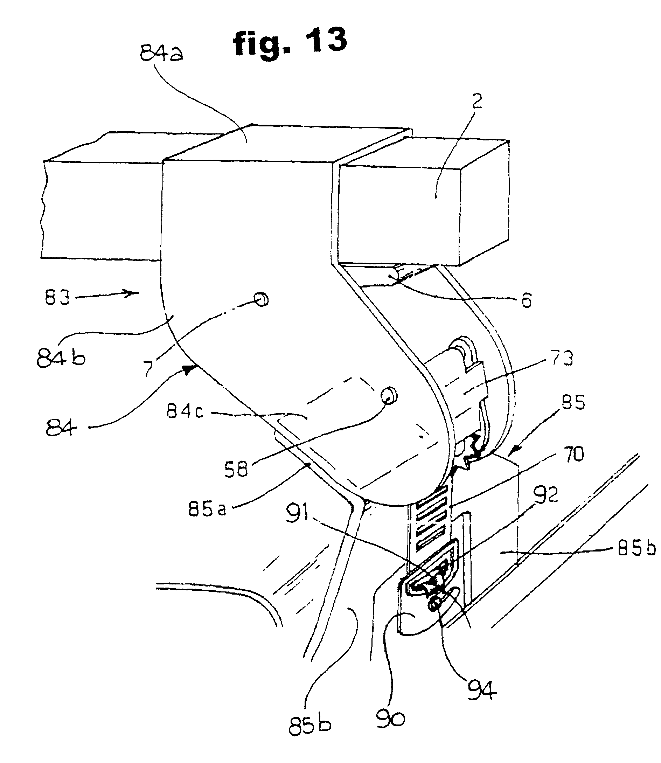

Figures 12 and 13 show a support 83 which comprises a first bracket 84. The bearing foot is constituted by a second bracket 85 in the form of an inverted Y comprising a leg 85a and two arms 85b.

The second bracket 85 is secured to the first bracket 84 by means of a bolt 86 which passes through a plate 84c secured between the upright sides 84b of the bracket 84.

The bar is again indicated 2. The bracket 84 in the form of an inverted U again comprises an upper wall 84a and two sides 84b.

The reference 6 again indicates a cam lever having a pin 7 for locking the bar 2 against the upper wall 84a of the bracket 84.

Advantageously, the Y shape of the bearing foot 85 enables the support 83 to be secured to the vehicle roof without the edge of the roof interfering with the metal strip 70, even if the strip 70 is secured in an almost vertical position relative to the vehicle roof, as illustrated in Figures 12 and 13.

As illustrated especially in Figure 12, in order to adapt the load-carrier device to the various motor vehicle models, it is possible to provide suitable locking means, such as, purely by way of example, a coupler 90 which is provided at one end with a hooking wing 91 for engagement in a slot 92 of the strip 70 and, at the opposite end, with a hole for the insertion of a threaded pin 94 which, in some motor vehicle models, is screwed into a suitable hole provided near the gutter in the edge of the roof.

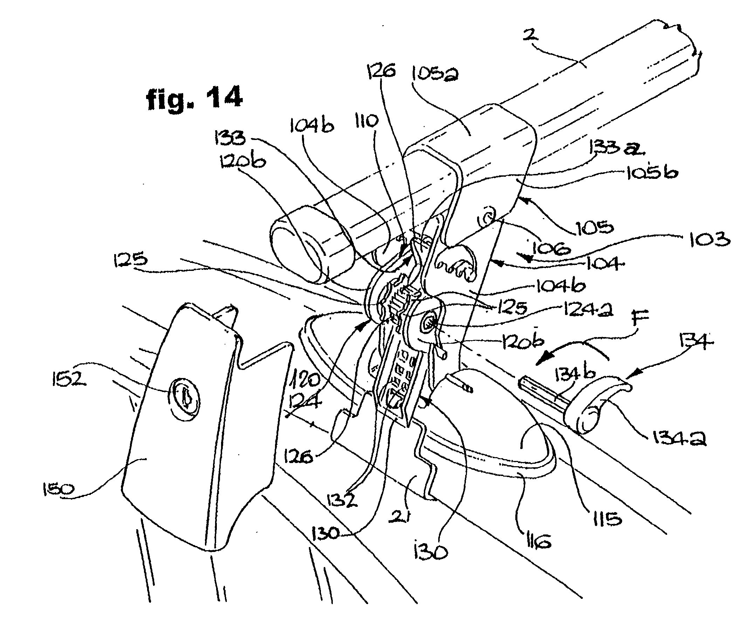

Reference will now be made to Figures 14 to 18 to describe a third embodiment of the invention.

The load-carrier device of Figures 14 to 18 again comprises a transverse bar 2 which, towards its ends, is carried by a pair of supports 103.

Each support 103 again comprises a bracket 104 constituted by a sheet-metal element in the form of an inverted U having an upper wall 104a and a pair of sides 104b.

Unlike the previous embodiments, the support 104 is also provided with a sheet-metal yoke 105 in the form of an inverted U which comprises an upper wall 105a and a pair of wings 105b.

The bracket 104 and the yoke 105 are articulated to one another by means of a pin 106.

In the installed state, the bar 2 is interposed between the upper walls 104a of the bracket 104 and 105a of the yoke 105 and is surrounded by the wings 105b of the yoke 105.

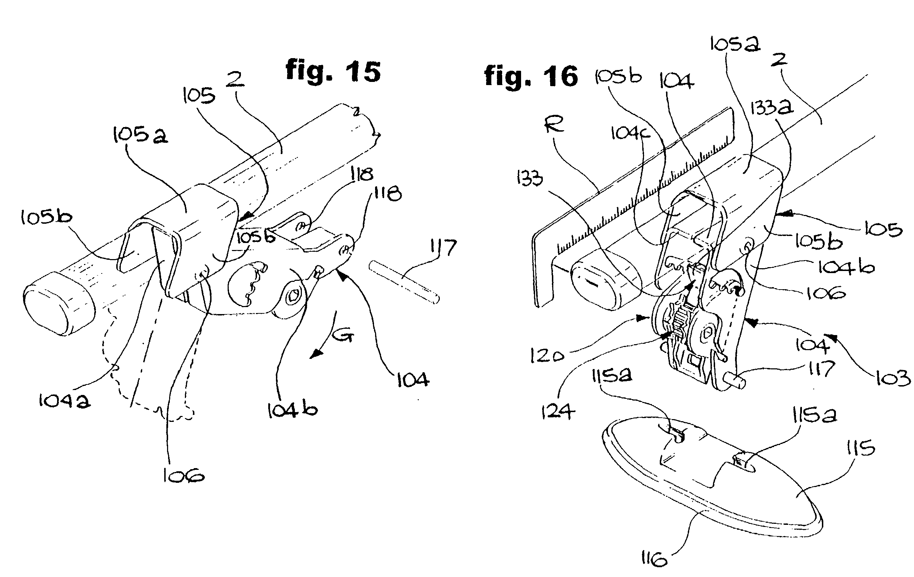

As will be appreciated from Figure 15, when the load-carrier device is not installed, each bracket 104 can be folded against the bar 2 in order to reduce the bulk of the device.

A pivoting bearing foot 115 having a base 116 of plastics material for resting on the edge region of the motor vehicle roof is associated with the bracket 104.

In order to articulate the foot 115 to the bracket 104, the foot 115 has a pair of grooves 115a which are open at the top.

The grooves 115a are used to accommodate a pin 117 carried by the lower ends of the sides 104b of the bracket 104.

With that arrangement, although an articulated connection is produced between the bracket 104 and the foot 115, the foot can be removed when the load-carrier device is not installed, in order to reduce the bulk thereof when the bracket 104 is folded as in Figure 15.

Before moving on to describe the tensioning system associated with the bracket 104, the manner in which the bar 2 is fitted on each bracket 104 will be described.

Starting from the state shown in Figure 15, the bracket 104 is unfolded by moving it from the position illustrated by continuous lines in Figure 15, in accordance with the arrow G, to the position illustrated by broken lines.

The unfolding takes place by passing a dead point owing to an upper bulging portion 104c of the wall 104a which cooperates in the manner of a cam with the bar 2.

The locking of the bar 2 in the correct position relative to the bracket 104 will be described hereinafter.

For the moment, it will be sufficient to say hat the load-carrier device is provided with a rule R (Figure 16) which is used to determine the distance between the yoke 105 and the associated end of the bar 2 so that, when installation is complete, the two ends of the bar 2 project by equal amounts relative to the associated supports 103.

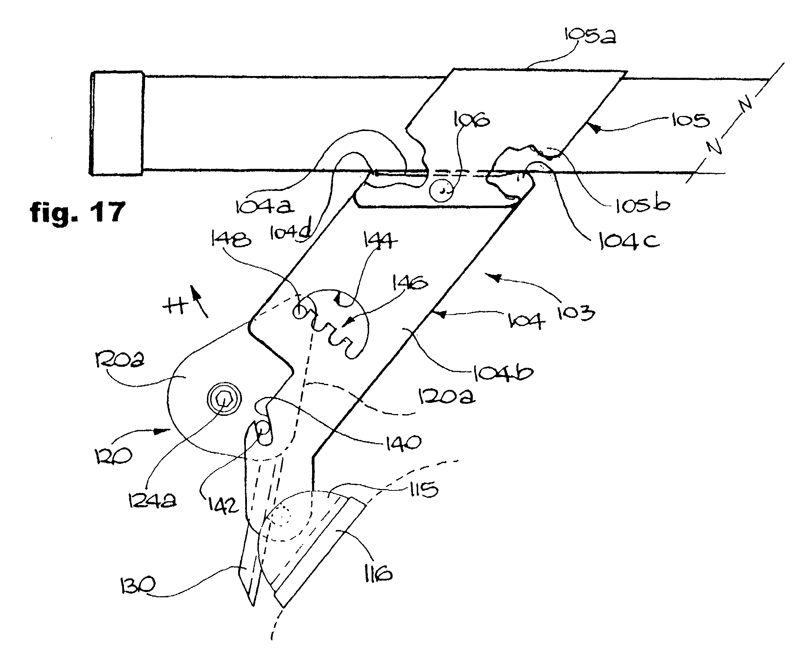

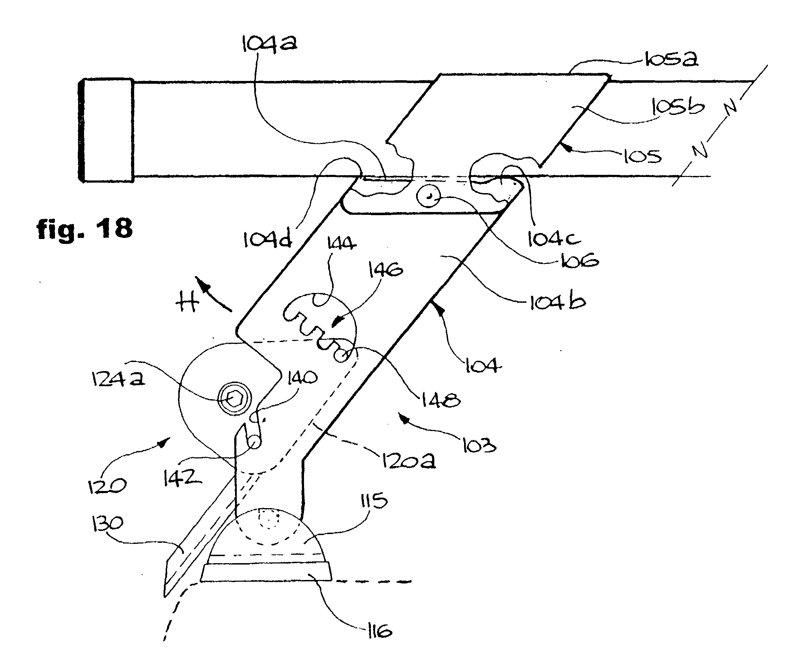

As in the embodiment of Figures 8 to 11, a guide constituted by a sheet-metal element 120, having a base wall 120a (Figures 17 and 18) and two lateral cheeks 120b, is articulated in the bracket 104 of the support 103.

The base wall 120a constitutes a bearing and sliding surface for a tensioning strip which will be discussed hereinafter.

Rotatably mounted between the cheeks 120b is a sprocket member 124 which comprises a pair of sets of teeth 125 or actual sprocket wheels and an intermediate serrated region 126.

An inextensible metal tensioning strip 130, which in the present case is preferably rigid and is constituted by a channel-shaped element, is arranged between the sliding surface 120a, constituted by the base wall of the guide 120, and the sprocket 124.

The strip 130 has, as in the first embodiment, a double row of slots 132 which constitute a rack engaged with the teeth 125.

In order to permit rotation of the sprocket 124 only in the sense indicated by the arrow F in Figure 14, which corresponds to the direction in which the strip 130 is pulled towards the inside of the guide 120, a pawl 133, which is similar to that of Figures 9, 10, 12 and 13 and which cooperates with the intermediate notches 126 to fulfill the same function, is provided.

The reference numeral 133a indicates a tongue of the pawl 133, which tongue acts as a lever for disengaging the pawl from the serrations 126.

The rotation of the sprocket 124 in the sense opposite to that indicated by the arrow F in Figure 14 and the consequent sliding of the strip 130 towards the outside relative to the guide 120 are permitted only by disengaging the pawl 133 from the teeth 125 by applying pressure with the finger on the tongue 133a.

As described for the previous embodiments, the strip 130 comprises a slot for securing an interchangeable coupler which is likewise designated 21 and which has substantially the same characteristics as the coupler illustrated in Figures 1 and 2.

As in the previous embodiments, the device of Figures 14 to 18 is locked in position by securing the coupler 21, of a type adapted to the shape of the edge of the motor vehicle roof, to the means provided on that edge for securing load-carrier devices, and by placing the metal strip 130 under tension by rotation of the sprocket 124 in accordance with the arrow F of Figure 14 and by means of the engagement of the teeth 125 with the slots 132 of the strip 130.

The rotation of the sprocket 124 in accordance with the arrow F is obtained by means of a removable or fixed key 134.

The key 134 comprises a maneuvering arm or lever 134a and a hexagonal leg 134b inserted permanently or removably in a hexagonal central hole 124a of the sprocket member 124.

When the strip 130 is placed under tension by maneuvering the key 134, the bracket 104 undergoes a rotational movement towards the outside in accordance with arrow H (Figures 17 and 18), about its axis of articulation defined by the pin 106, which rotation corresponds to the direction of movement of the foot 115 laterally towards the outside.

The rotation of the bracket 104 in accordance with arrow H causes an external lateral edge 104d, raised in the form of a tooth, of the upper wall 104a of the bracket 104 to bite into the bar 2, thus preventing the bar 2 from sliding in the yoke 105.

The locking of the bar 2 thus achieved fixes the final position thereof, which has been defined beforehand by means of the rule R of Figure 16.

The manner in which the inclination of the guide surface constituted by the base wall 120a of the guide 120 is varied will now be described.

For this description, particular reference will be made to Figures 17 and 18.

In the vicinity of the foot 115, the sides 104b of the bracket 104 have a pair of homologous lower recesses 140 which are open at the top and in which corresponding lower pins 142 of the guide 120 are engaged.

In the vicinity of the bar 2, the sides 104b of the bracket 104 have respective openings 144, the lower edge of which is cut with a set of recesses 146, which are the same on both sides 104b. The recesses 146 are open at the top.

The series of recesses 146 (four in number in the case represented) extend in a transverse direction relative to the direction of travel of the vehicle.

Towards its upper end, the guide 120 is provided with pins 148 engageable in the recesses of the respective sets 146.

The inclination of the guide 120 and its bearing and sliding surface for the strip 130 can be modified by raising the guide 120, owing to the ability of the lower pins 142 to slide in the lower recesses 140 until the upper pins 148 are disengaged from a pair of recesses of the sets 146, the upper pins 148 then being re-inserted in another pair of upper recesses and the lower pins 142 being caused to descend into the lower recesses 140.

Figures 17 and 18 illustrate two positions of the support 103 of the load-carrier device by way of example.

In Figure 17, the pins 148 are positioned in the recesses on the extreme left, the strip 130 is inclined almost vertically and the foot 115 rests with its base 116 on a greatly inclined edge region of a motor vehicle roof, without touching the roof.

In Figure 18, the pins 148 are positioned in the recesses on the extreme right, the strip 130 is greatly inclined and the foot 115 rests with its base 116 on a substantially horizontal edge region of a motor vehicle roof, without touching the roof.

As in the previous embodiments, the load-carrier device of Figures 14 to 18 is provided with a cover 150 which has the same function as the cover 36 of Figure 2 and which is constituted by a shell-like element, for example of plastics material.

The cover 150 is shaped in such a manner that, when the load-carrier device is installed and adjusted, it masks the entire bracket 104 and the mechanisms which the latter contains, in order to prevent the disengagement of the pawl 133 from the serrations 126 of the sprocket 124 and therefore both the loosening of the tensioning strip 130 and the release of the bar 2 by disengagement of the edge 104c from the bar.

The cover 150 is provided with a keylock 152 having an anchor (not shown) which, when the lock is closed, engages behind the maneuvering tongue 133a of the pawl 133, thus holding the pawl in engagement with the serrations 126.

## Claims

1. A load-carrier device for motor vehicle roofs, comprising a transverse bar (2), a pair of supports (3; 53; 103) provided at the ends of the bar for securing the device to the roof of the motor vehicle and each having a foot (5; 55; 85; 115) for resting on an edge region of the roof, and, for each support, securing means which comprise a coupler (21) engageable with the edge of the roof, a sprocket wheel member (22; 65; 125) which is rotatable in the support, an inextensible tensioning strip (20; 70; 130) which has a row of formations (23; 72; 133) constituting a rack engaged with the sprocket member and one end of which is connected to the coupler, means for manually rotating the sprocket member in a tightening sense so that the strip is pulled in the direction causing the coupler to approach the support, and a pawl (27; 73; 133) pivoted in the support and engageable and disengageable relative to the sprocket member to prevent the sprocket member from rotating in a loosening sense opposite to the above-mentioned tightening sense and to permit such rotation, respectively,
**characterised in that** each support (3; 53; 103) has a bearing and sliding surface (24; 28a, 28b, 28c; 60a; 120a) for the tensioning strip (20; 70; 130) and **in that** the surface has means (24; 25; 60; 120) associated thereto which are adapted to vary or modify the inclination thereof according to the profile of the edge region of the roof and for a whole range of distances of the support from the edge of the roof, in such a manner that said means (24; 25; 60; 120) allow to obtain an inclination of the bearing and sliding surface so that the tensioning strip follows, between the support and the coupler, a path in which it is adjacent to that edge region, but does not come into contact with the edge region.

2. A device according to claim 1, **characterised in that** the bearing foot comprises a sheet-metal plate (5) in which is formed a wing (24) which is connected integrally to the plate in a linear bending region which is adjacent and substantially parallel to the edge of the roof, **in that** the bearing surface of the strip is constituted by an upper surface of the wing (24), and **in that** the bearing surface can be inclined by bending the wing (24) about the bending region in accordance with a selected angulation.

3. A device according to claim 1, **characterised in that** the bearing foot is provided with a set of interchangeable prismatic blocks (28), each of which has, at the top, a bearing and sliding surface (28a, 28b, 28c) for the strip (20), and **in that** the bearing surfaces of the blocks of the set have different inclinations in order to obtain a selected angulation of the bearing surface.

4. A device according to claim 1, **characterised in that** the support (53; 103) is provided internally with a guide (60; 120) having a variable inclination and the bearing surface is formed by a wall (60a; 120a) of that guide.

5. A device according to claim 4, **characterised in that** the support comprises a bracket (54; 84; 104) in the form of an inverted U having an upper portion to which the bar (2) is secured and having a pair of sides (54a; 84a; 84b) which surround the guide (60; 120), and **in that** the guide is constituted by a U-shaped element having a base wall (60a; 120a) which constitutes the above-mentioned bearing surface for the strip (70; 130) and has a pair of cheeks (60b; 120b) articulated to the sides of the bracket.

6. A device according to claim 4 or 5, **characterised in that** the guide (70) is freely pivoting in the support (53).

7. A device according to claim 4 or 5, **characterised in that** the guide (120) and the support (103) are provided with positioning means (146; 148) for securing the guide relative to the support in a plurality of inclined positions.

8. A device according to claim 5, **characterised in that**, in the vicinity of the foot (115), the sides (104b) of the bracket (104) have a pair of homologous lower recesses (140) which are open at the top and in which are engaged corresponding lower pins (142) of the guide (120), **in that**, in the vicinity of the bar (2), the sides of the bracket have homologous sets of upper recesses (146) which are open at the top and in which are engaged corresponding second pins (148) of the guide, which sets of recesses extend in a transverse direction relative to the direction of travel of the vehicle, and **in that** the inclination of the guide can be modified by raising the guide, owing to the ability of the lower pins to slide in the lower recesses, until the upper pins are disengaged from a pair of upper recesses, the upper pins then being re-inserted in another pair of upper recesses and the lower pins being caused to descend again into the two lower recesses.

9. A device according to any one of claims 5 to 8, **characterised in that** it also comprises a yoke (105) in the form of an inverted U having a pair of wings (105b) articulated to the sides (104b) of the bracket (104) and having an upper wall (105a), **in that** the bar (2) is interposed between the upper walls (104a, 105a) of the bracket and of the yoke and is surrounded by the wings of the yoke, and **in that** the arrangement is such that a rotational movement of the bracket about the axis of articulation (106) between the yoke and the bracket in the sense of movement of the foot laterally towards the outside causes a laterally external edge (104c) of the upper wall of the bracket to bite into the bar in order to prevent the bar from sliding in the yoke.

10. A device according to any one of the preceding claims, **characterised in that** it also comprises an anti-theft cover (36; 150) which is provided with closing means (35; 152) and which is suitable for preventing access to the mechanism for pulling the strip.

11. A device according to claim 10, **characterised in that** the sprocket member comprises a pair of sprocket wheels (22) which are spaced apart from one another and which each have an annular groove (33) formed **in that** face of the sprocket which faces the other sprocket, and **in that** the closing means comprise a lock barrel (35) which is fast with the cover (36) and which has a rotatable anchor (34) which, in the closed state of the lock, is engaged in both of the above-mentioned annular grooves (33).

12. A device according to any one of claims 4 to 11, **characterised in that** the above-mentioned pawl is constituted by a stop plate (73; 133) hinged to the guide (60; 120) and engaging with serrations (65; 126) of the sprocket member (65; 125).

13. A device according to any one of the preceding claims, **characterised in that** the foot of the support (3; 53; 103) is a pivoting foot (5; 55; 115).

14. A device according to any one of claims 1 to 12, **characterised in that** the foot (85) of the support (83) is constituted by a metal plate in the form of an inverted Y which is adapted to rest in a gutter of the side edge of the vehicle roof.

15. A device according to any one of the preceding claims, **characterised in that** the above-mentioned tensioning strip (20; 70; 130) is provided, at its outer end, with an interchangeable coupler (21) which can be oriented to either side of the strip.

16. A device according to claim 15, **characterised in that** the external end of the strip (20; 70) has a crescent-shaped slot (42) and the coupler has a curved hooking member (41) which is engaged in the crescent-shaped slot.

17. A device according to any one of claims 5 to 16, **characterised in that** the bracket of the support comprises an upper central portion (4a) in which the transverse bar (2) is slideable, and the transverse bar is secured in the bracket (4) by the cooperation of a cam member (6) and the above-mentioned upper portion.

18. A device according to any one of the preceding claims, **characterised in that** the tensioning strip (20; 70) is flexible.

19. A device according to any one of claims 1 to 17, **characterised in that** the tensioning strip (130) is rigid.

## Patentansprüche

1. Vorrichtung zum Tragen von Lasten auf Kraftfahrzeugdächern, umfassend einen Querholm (2), ein Paar von Trägern (3; 53; 103), die an den Enden des Querholms für die Befestigung der Vorrichtung am Dach des Kraftfahrzeugs vorgesehen sind und von denen jeder einen Fuß (5; 55; 85; 115) zum Abstützen an einem Randbereich des Daches sowie Befestigungsmittel aufweist, die für jeden Träger bestehen aus einem mit dem Rand des Daches in Eingriff bringbaren Verbindungsglied (21), einem in dem Träger drehbaren Zahnradglied (22; 65; 125), einem nicht dehnbaren Zugband (20; 70; 130), das eine Reihe von Formationen (23; 72; 133) aufweist, die eine mit dem Zahnradglied kämmende Zahnreihe bilden, wobei ein Ende des Zugbandes mit dem Verbindungsglied verbunden ist, Mittel zum manuellen Drehen des Zahnradgliedes in Spannrichtung derart, daß das Zugband in einer solchen Richtung angezogen wird, daß das Verbindungsglied näher an den Träger gebracht wird, und eine Sperrklinke (27; 73; 133), die in dem Träger schwenkbar gelagert ist und mit dem Zahnradglied in Eingriff und außer Eingriff gebracht werden kann, um eine Drehung des Zahnradgliedes in Löserichtung entgegengesetzt zu der genannten Spannrichtung zu vermeiden bzw. eine Rotation in Spannrichtung zuzulassen,
**dadurch gekennzeichnet, daß** jeder Träger (3; 53; 103) eine Fläche (24; 28a, 28b, 28c; 60a; 120a) für die Abstützung und Gleitbewegung des Zugbandes (20; 70, 130) aufweist und daß dieser Fläche Mittel (24; 25; 60; 120) zugeordnet sind, die geeignet sind, die Neigung der Fläche zur Anpassung an das Profil des Randbereichs des Daches über einen gesamten Bereich von Abständen zwischen dem Träger und dem Rand des Daches zu variieren oder modifizieren derart, daß die genannten Mittel (24; 25; 60; 120) eine Neigung der Abstütz- und Gleitfläche in der Weise gestatten, daß sich das Zugband zwischen dem Träger und dem Verbindungsglied auf einer Bahn erstreckt, die dem Randbereich benachbart ist, mit diesem jedoch nicht in Berührung kommt.

2. Vorrichtung nach Anspruch 1, **dadurch gekennzeichnet, daß** der Abstützfuß eine aus Blech bestehende Platte (5) aufweist, in die ein Flügel (24) eingeformt ist, der mit der Platte in einem Biegelinienbereich einstückig verbunden ist, welcher dem Rand des Daches benachbart ist und im wesentlichen parallel zu diesem verläuft, daß die Abstützfläche für das Zugband durch die Oberseite des Flügels (24) gebildet ist und daß die Abstützfläche geneigt werden kann durch Biegen des Flügels (24) entsprechend dem ausgewählten Winkel um den Biegelinienbereich.

3. Vorrichtung nach Anspruch 1, **dadurch gekennzeichnet, daß** der Abstützfuß mit einer Reihe von austauschbaren prismatischen Blöcken (28) ausgerüstet ist, von denen jeder an der Oberseite eine Fläche (28a, 28b, 28c) zum Abstützen und Gleiten des Zugbandes (20) hat, und daß die Abstützflächen der Blöcke unterschiedliche Neigungen haben, um die ausgewählte Winkelstellung der Abstützfläche herzustellen.

4. Vorrichtung nach Anspruch 1, **dadurch gekennzeichnet, daß** der Träger (53; 103) innen mit einer Führung (60; 120) versehen ist, die eine variable Neigung hat, wobei die Abstützfläche durch eine Wand (60a; 120a) dieser Führung gebildet wird.

5. Vorrichtung nach Anspruch 4, **dadurch gekennzeichnet, daß** der Träger einen Bügel (54; 84; 104) in der Form eines umgekehrten U aufweist, an dessen oberem Bereich der Querholm (2) befestigt ist, während dessen beide Seitenwände (54a; 84a; 84b) die Führung (60; 120) umschließen, und daß die Führung aus einem U-förmigen Element besteht, dessen Bodenwand (60a; 120a) die genannte Abstützfläche für das Zugband (70; 130) bildet, während die beiden Wangen (60b; 120b) an den Seitenwänden des Bügels angelenkt sind.

6. Vorrichtung nach Anspruch 4 oder 5, **dadurch gekennzeichnet, daß** die Führung (70) in dem Träger (53) frei schwenkbar gelagert ist.

7. Vorrichtung nach Anspruch 4 oder 5, **dadurch gekennzeichnet, daß** die Führung (120) und der Träger (103) mit Positioniermitteln (146; 148) zum Fixieren der Führung relativ zum Träger in einer Mehrzahl von Schrägstellungen ausgerüstet sind.

8. Vorrichtung nach Anspruch 5, **dadurch gekennzeichnet, daß** die Seitenwände (104b) des Bügels (104) in der Nähe des Fußes (115) ein Paar einander entsprechender, unterer Einschnitte (140) haben, die nach oben offen sind und in die entsprechende, untere Stifte (142) der Führung (120) eingreifen, daß die Seitenwände des Bügels in der Nähe des Querholms (2) einander entsprechende Reihen oberer Einschnitte (146) haben, die nach oben offen sind und in die entsprechende, zweite Stifte (148) der Führung eingreifen, wobei sich die Reihen der Einschnitte (146) in einer Querrichtung bezüglich der Fahrtrichtung des Fahrzeugs erstrecken, und daß die Neigung der Führung veränderbar ist durch Anheben der Führung aufgrund der Möglichkeit der unteren Stifte, sich in den unteren Einschnitten zu bewegen, bis die oberen Stifte außer Eingriff mit einem Paar der oberen Einschnitte kommen, wonach die oberen Stifte in ein anderes Paar der oberen Einschnitte eingreifen und die unteren Stifte wieder in die beiden unteren Einschnitte zurückfallen.

9. Vorrichtung nach einem der Ansprüche 5 bis 8, **dadurch gekennzeichnet, daß** diese ein Joch (105) in Form eines umgekehrten U mit einem Paar von an den Seitenwänden (104b) des Bügels (104) angelenkten Schenkeln (105b) und einer oberen Wand (105a) aufweist, daß der Querholm (2) zwischen die oberen Wände (104a, 105a) des Bügels und des Joches eingesetzt ist und von den Schenkeln des Joches umfasst wird und daß die Anordnung so getroffen ist, daß eine Drehbewegung des Bügels um die Drehachse (106) zwischen Joch und Bügel in Bewegungsrichtung des Fußes seitlich nach außen einen äußeren Seitenrand (104c) der oberen Wand des Bügels in Klemmeingriff mit dem Querholm bringt, wodurch ein Verschieben des Querholms in dem Joch unterbunden wird.

10. Vorrichtung nach einem der vorhergehenden Ansprüche, **gekennzeichnet durch** einen Diebstahlsicherungsdeckel (36; 150), der mit Schließmitteln (35; 152) ausgerüstet ist und einen Zugang zu dem Mechanismus zum Anziehen des Zugbandes verhindert.

11. Vorrichtung nach Anspruch 10, **dadurch gekennzeichnet, daß** das Zahnradglied zwei Zahnräder (22) aufweist, die einen Abstand voneinander haben und jeweils eine Ringnut (33) aufweisen, welche in die Seite des Zahnrades eingearbeitet ist, die der gegenüberliegenden Seite des anderen Zahnrades zugewandt ist, und daß die Schließmittel ein Schloß (35) aufweisen, das fest mit dem Deckel (36) verbunden ist und einen drehbaren Anker (34) hat, welcher im verschlossenen Zustand des Schlosses in beide Ringnuten (33) eingreift.

12. Vorrichtung nach einem der Ansprüche 4 bis 11, **dadurch gekennzeichnet, daß** die Sperrklinke aus einer Rastplatte (73; 133) besteht, die an der Führung (60; 120) angelenkt ist und mit Zacken (65; 126) des Zahnradgliedes (65; 125) in Eingriff kommt.

13. Vorrichtung nach einem der vorhergehenden Ansprüche, **dadurch gekennzeichnet, daß** der Abstützfuß des Trägers (3; 53; 103) ein schwenkbarer Fuß (5; 55; 115) ist.

14. Vorrichtung nach einem der Ansprüche 1 bis 12, **dadurch gekennzeichnet, daß** der Abstützfuß (85) des Trägers (83) aus einer Metallplatte in Form eines umgekehrten Y besteht, die für den Eingriff in eine Rinne am seitlichen Rand des Fahrzeugdaches ausgebildet ist.

15. Vorrichtung nach einem der vorhergehenden Ansprüche, **dadurch gekennzeichnet, daß** das Zugband (20; 70; 130) an seinem äußeren Ende mit einem auswechselbaren Verbindungsglied (21) versehen ist, das bezüglich des Zugbandes nach beiden Seiten schwenkbar ist.

16. Vorrichtung nach Anspruch 15, **dadurch gekennzeichnet, daß** am äußeren Ende des Zugbandes (20; 70) eine halbmondförmige Öffnung (42) ausgebildet ist und daß das Verbindungsglied einen gekrümmten Haken (41) aufweist, der in die halbmondförmige Öffnung eingreift.

17. Vorrichtung nach einem der Ansprüche 5 bis 16, **dadurch gekennzeichnet, daß** der Bügel des Trägers oben einen mittleren Bereich (4a) aufweist, in welchem der Querholm (2) verschiebbar ist, und daß der Querholm in dem Bügel (4) gesichert ist durch die Zusammenwirkung eines Nockengliedes (6) mit dem genannten oberen Bereich.

18. Vorrichtung nach einem der vorhergehenden Ansprüche, **dadurch gekennzeichnet, daß** das Zugband (20; 70) flexibel ist.

19. Vorrichtung nach einem der Ansprüche 1 bis 17, **dadurch gekennzeichnet, daß** das Zugband (130) steif ist.

## Revendications

1. Dispositif porte-charge pour toits de véhicules automobiles, comprenant une barre transversale (2), une paire de supports (3; 53; 103) prévus aux extrémités de la barre pour fixer le dispositif au toit du véhicule automobile et chacun desquels comporte un pied (5; 55; 85; 115) pour l'appui sur une zone marginale du toit, et, pour chaque support, des moyens de fixation qui comprennent une patte (21) susceptible d'engager le bord du toit, un élément à rochet (22; 65; 125) monté rotatif dans le support, une bande de traction inextensible (20; 70; 130) qui présente une rangée de formations (23; 72; 133) constituant une crémaillère en prise avec l'élément à rochet et une extrémité de laquelle est reliée à la patte, des moyens pour faire tourner à la main l'élément à rochet dans un sens de serrage de façon à ce que la bande soit tirée dans le sens de rapprochement de la patte et du support, et un cliquet (27; 73; 133) pivotant dans le support et susceptible d'engager l'élément à rochet et de s'en dégager pour empêcher que l'élément à rochet tourne dans un sens de relâchement opposé audit sens de serrage et permettre cette rotation, respectivement,
**caractérisé en ce que** chaque support (3; 53; 103) présente une surface d'appui et de glissement (24; 28a, 28b, 28c ; 60a; 120a) pour la bande de traction (20; 70; 130) et **en ce qu'**à cette surface sont associés des moyens (24; 25; 60; 120) capables de varier ou modifier son inclinaison selon le profil de la zone marginale du toit et pour toute une gamme de distances entre le support et le bord du toit, de façon telle que lesdits moyens (24; 25; 60; 120) permettent d'obtenir une inclinaison de la surface d'appui et de glissement grâce à laquelle la bande de traction suit, entre le support et la patte, un parcours dans lequel elle est adjacente à la zone marginale, mais elle ne vient pas en contact avec la zone marginale.

2. Dispositif selon la revendication 1, **caractérisé en ce que** le pied d'appui comprend une plaque de tôle (5) dans laquelle est formée une ailette (24) qui est reliée d'une seule pièce à la plaque dans une zone de pliage linéaire qui est adjacente et sensiblement parallèle au bord du toit, **en ce que** la surface d'appui de la bande est constituée par une surface supérieure de l'ailette (24), et **en ce que** la surface d'appui peut être inclinée moyennant le pliage de l'ailette (24) autour de la zone de pliage selon un angle sélectionné.

3. Dispositif selon la revendication 1, **caractérisé en ce que** le pied d'appui est pourvu d'un jeu de blocs prismatiques interchangeables (28) chacun desquels présente, sur le dessus, une surface d'appui et de glissement (28a, 28b, 28c) pour la bande (20), et **en ce que** les surfaces de glissement des blocs du jeu ont des inclinaisons différentes pour obtenir un angle sélectionné de la surface d'appui.

4. Dispositif selon la revendication 1, **caractérisé en ce que** le support (53; 103) est pourvu à son intérieur d'une glissière (60; 120) ayant une inclinaison variable et la surface d'appui est formée par une paroi (60a; 120a) de cette glissière.

5. Dispositif selon la revendication 4, **caractérisé en ce que** le support comporte un étrier (54; 84a; 84b) en forme de U renversé ayant une partie supérieure à laquelle la barre (2) est fixée et ayant une paire de flancs (54a; 84a; 84b) qui entourent la glissière (60; 120), et **en ce que** la glissière est constituée par un élément en forme de U ayant une paroi de base (60a; 120a) qui constitue ladite surface d'appui pour la bande (70; 130) et une paire de joues (60b; 120b) articulées aux flancs de l'étrier.

6. Dispositif selon la revendication 4 ou 5, **caractérisé en ce que** la glissière (70) est libre de pivoter dans le support (33).

7. Dispositif selon la revendication 4 ou 5, **caractérisé en ce que** la glissière (120) et le support (103) sont pourvus de moyens de positionnement (146; 148) pour fixer la glissière par rapport au support dans une pluralité de positions inclinées.

8. Dispositif selon la revendication 5, **caractérisé en ce qu'**au voisinage du pied (115) les flancs (104b) de l'étrier (104) présentent une paire d'évidements inférieurs homologues (140) qui sont ouverts vers le haut et dans lesquels sont engagés des tétons inférieurs (142) correspondants de la glissière (120), **en ce qu'**à proximité de la barre (2) les flancs de l'étrier présentent des séries homologues d'évidements supérieurs (146) qui sont ouverts vers le haut et dans lesquels son engagés des deuxièmes tétons (148) correspondants de la glissière, lesquelles séries d'évidements s'étendent dans une direction transversale par rapport à la direction de marche du véhicule, et **en ce que** l'inclinaison de la glissière peut être modifiée en soulevant la glissière, grâce au fait que les tétons inférieurs peuvent coulisser dans les évidements inférieurs jusqu'à ce que les tétons supérieurs se sont dégagés d'une paire d'évidements supérieurs, après quoi les tétons supérieurs sont réinsérés dans une autre paire d'évidements supérieurs et les tétons inférieurs sont faits redescendre dans las deux évidements inférieurs.

9. Dispositif selon l'une quelconque des revendications 5 à 8, **caractérisé en ce qu'**il comprend en outre une chape (105) en forme de U renversé, ayant une paire d'ailes (105b) articulées aux flancs (104b) de l'étrier (104) et ayant une paroi supérieure (105a), **en ce que** la barre (2) est interposée entre les parois supérieures (104a, 105a) de l'étrier et de la chape et est entourée par les ailes de la chape, et **en ce que** la disposition est telle que qu'un mouvement de rotation de l'étrier autour de l'axe d'articulation (106) entre la chape et l'étrier dans le sens de déplacement latéral du pied vers l'extérieur fait ainsi qu'un bord latéralement extérieur (104c) de la paroi supérieure de l'étrier vient mordre dans la barre pour empêcher que la barre de coulisse dans la chape.

10. Dispositif selon l'une quelconque des revendications précédentes, **caractérisé en ce qu'**il comprend en outre un couvercle antivol (36; 150) qui est pourvu de moyens de verrouillage (35; 152) et qui est conçu pour prévenir l'accès au mécanisme de traction de la bande.

11. Dispositif selon la revendication 10, **caractérisé en ce que** l'élément à rochet comprend une paire de roues à rochet (22) qui sont espacées l'une de l'autre et chacune desquelles présente une gorge annulaire (33) formée dans la face de la roue à rochet qui est tournée vers l'autre roue, et **en ce que** les moyens de verrouillage comprennent un Darillet de serrure (35) qui est solidaire du couvercle (36) et qui est pourvu d'une ancre rotative (34) laquelle, dans la condition verrouillée de la serrure, est engagée dans l'une et dans l'autre desdites gorges annulaires (33).

12. Dispositif selon l'une quelconque des revendications 4 à 11, **caractérisé en ce que** ledit cliquet est constitué par une plaquette d'arrêt (73; 133) montée pivotante sur la glissière (60; 120) et qui engage des dentures (65; 126) de l'élément à rochet.

13. Dispositif selon l'une quelconque des revendications précédentes, **caractérisé en ce que** le pied du support (3; 53; 103) est un pied pivotant (5; 55; 115).

14. Dispositif selon l'une quelconque des revendications 1 à 12, **caractérisé en ce que** le pied (85) du support (83) est constitué par une plaque métallique en forme de Y renversé, qui est apte à prendre appui dans une gouttière du bord latéral du toit du véhicule.

15. Dispositif selon l'une quelconque des revendications précédentes, **caractérisé en ce que** ladite bande de traction (20; 70; 130) est pourvue, à son extrémité extérieure, d'une patte interchangeable (21) qui peut être orientée de chaque côté de la bande.

16. Dispositif selon la revendication 15, **caractérisé en ce que** l'extrémité extérieure de la bande (20; 70) présente une fente (42) en forme de croissant et la patte comporte un élément d'accrochage incurvé (41) qui est engagé dans la fente en forme de croissant.

17. Dispositif selon l'une quelconque des revendications 5 à 16, **caractérisé en ce que** l'étrier du support comprend une partie centrale supérieure (4a) dans laquelle la barre transversale (2) peut coulisser, et la barre transversale est fixée dans l'étrier (4) grâce à la coopération d'un élément à came (6) et de ladite partie supérieure.

18. Dispositif selon l'une quelconque des revendications précédentes, **caractérisé en ce que** la bande de traction (20; 70) est flexible.

19. Dispositif selon l'une quelconque des revendications 1 à 17, **caractérisé en ce que** la bande de traction (130) est rigide.
